# EUROPEAN PATENT APPLICATION

(11) **EP 4 788 016 A1**
(43) Date of publication of application: **05.08.2026**
(21) Application number: 24869737.7
(22) Date of filing: 15.05.2024
(51) Int. Cl.: H04W 72/21, H04W 72/23, H04W 64/00

(54) **POSITIONING INFORMATION PROCESSING METHOD AND APPARATUS**

(30) Priority: 26.09.2023 CN 202311255456
(71) Applicant: Datang Mobile Communications Equipment Co., Ltd., Beijing 100085 (CN)
(72) Inventor: LI, Jianxiang, Beijing 100085 (CN)
(74) Representative: Maiwald GmbH
(86) International application number: PCT/CN2024/093310
(87) International publication number: WO 2025/066171

(57) **Abstract**

The present disclosure relates to the technical field of communications, and provides a positioning information processing method and apparatus. The method in embodiments of the present disclosure comprises: acquiring configuration information sent by a location management function (LMF), the configuration information comprising carrier aggregation information of one or more aggregated positioning reference signals of at least one network-side device, and the aggregated positioning reference signal being a positioning reference signal that has been subjected to carrier aggregation; and broadcasting the configuration information.

## Description

### CROSS-REFERENCE TO RELATED APPLICATION

This disclosure claims priority to the Chinese patent application No. 202311255456.8, entitled "Positioning Information Processing Method and Apparatus," which was filed with the China National Intellectual Property Administration on September 26, 2023, the entire contents of which are incorporated herein by reference.

### TECHNICAL FIELD

The present disclosure relates to the field of communication technologies, and in particular, to a positioning information processing method and apparatus.

### BACKGROUND

In the related art, a terminal measures a downlink Positioning Reference Signal (PRS) according to downlink PRS resource information provided by a cellular network, thereby supporting high-precision positioning based on a cellular network. At present, only positioning reference signals with a bandwidth of 100 MHz are supported. However, if the bandwidth of the positioning reference signal is expanded, the positioning accuracy will be improved accordingly. When improving the positioning accuracy of a large number of terminals, the network needs to perform signaling interaction with each of these terminals, which imposes a large air interface signaling overhead on the entire cell.

### SUMMARY

An objective of the present disclosure is to provide a positioning information processing method and apparatus, to address the problem that a large air interface signaling overhead is imposed on an entire cell when the positioning accuracy of a large number of terminals is improved.

Some embodiments of the present disclosure provide a positioning information processing method performed by a network-side device, the method includes:
obtaining configuration information sent by a Location Management Function (LMF), wherein the configuration information includes carrier aggregation information of one or more aggregated positioning reference signals of at least one network-side device, and the one or more aggregated positioning reference signals are one or more positioning reference signals after being subjected to carrier aggregation; and
broadcasting the configuration information.

In some embodiments, before obtaining the configuration information sent by the Location Management Function (LMF), the method further includes:
sending the one or more aggregated positioning reference signals;
sending the carrier aggregation information of the one or more aggregated positioning reference signals and cell identification information corresponding to the network-side device to the LMF.

In some embodiments, the carrier aggregation information includes frequency domain resource information of a plurality of carriers and time domain resource information of one of the plurality of carriers.

Some embodiments of the present disclosure further provide a positioning information processing method, performed by a terminal, the method includes:
obtaining configuration information broadcast by a network-side device, wherein the configuration information includes carrier aggregation information of one or more aggregated positioning reference signals of at least one network-side device, and the one or more aggregated positioning reference signals are one or more positioning reference signals after being subjected to carrier aggregation; and
selecting a target aggregated positioning reference signal for measurement according to the configuration information and a carrier aggregation capability of the terminal, wherein the target aggregated positioning reference signal is a positioning reference signal among the one or more aggregated positioning reference signals sent by the at least one network-side device.

In some embodiments, the carrier aggregation information includes frequency domain resource information of a plurality of carriers and time domain resource information of one of the plurality of carriers.

Some embodiments of the present disclosure further provide a positioning information processing method performed by a Location Management Function (LMF), the method includes: obtaining carrier aggregation information of one or more aggregated positioning reference signals of at least one network-side device, wherein the one or more aggregated positioning reference signals are one or more positioning reference signals after being subjected to carrier aggregation; sending configuration information to a target network-side device based on the carrier aggregation information, wherein the configuration information includes carrier aggregation information of the one or more aggregated positioning reference signals of the at least one network-side device.

In some embodiments, the carrier aggregation information includes the carrier aggregation information of the one or more aggregated positioning reference signals and cell identification information corresponding to the network-side device.

In some embodiments, the carrier aggregation information includes frequency domain resource information of a plurality of carriers and time domain resource information of one of the plurality of carriers.

Some embodiments of the present disclosure further provide positioning information processing apparatus, including a memory, a transceiver, and a processor; wherein the memory is configured to store a computer program; the transceiver is configured to send and receive data under control of the processor; and the processor is configured to read the computer program in the memory and perform the following operations:
obtaining configuration information sent by a Location Management Function (LMF), wherein the configuration information includes carrier aggregation information of one or more aggregated positioning reference signals of at least one network-side device, and the one or more aggregated positioning reference signals are one or more positioning reference signals after being subjected to carrier aggregation; and
broadcasting the configuration information.

In some embodiments, the processor further implements the following steps:
sending the one or more aggregated positioning reference signals;
sending the carrier aggregation information of the one or more aggregated positioning reference signals and cell identification information corresponding to the network-side device to the LMF.

In some embodiments, the carrier aggregation information includes frequency domain resource information of a plurality of carriers and time domain resource information of one of the plurality of carriers.

Some embodiments of the present disclosure further provide a positioning information processing apparatus, including a memory, a transceiver, and a processor; wherein the memory is configured to store a computer program; the transceiver is configured to send and receive data under the control of the processor; and the processor is configured to read the computer program in the memory and perform the following operations:
obtaining configuration information broadcast by a network-side device, wherein the configuration information includes carrier aggregation information of one or more aggregated positioning reference signals of at least one network-side device, and the one or more aggregated positioning reference signals are one or more positioning reference signals after being subjected to carrier aggregation; and
selecting a target aggregated positioning reference signal for measurement according to the configuration information and carrier aggregation capability of a terminal, wherein the target aggregated positioning reference signal is a positioning reference signal among the one or more aggregated positioning reference signals sent by at least one network-side device.

In some embodiments, the carrier aggregation information includes frequency domain resource information of a plurality of carriers and time domain resource information of one of the plurality of carriers.

Some embodiments of the present disclosure further provide a positioning information processing apparatus, including a memory, a transceiver, and a processor; wherein the memory is configured to store a computer program; the transceiver is configured to send and receive data under control of the processor; and the processor is configured to read the computer program in the memory and perform the following operations:
obtaining carrier aggregation information of one or more aggregated positioning reference signals of at least one network-side device, wherein the one or more aggregated positioning reference signals are one or more positioning reference signals after being subjected to carrier aggregation;
sending configuration information to a target network-side device based on the carrier aggregation information, wherein the configuration information includes the carrier aggregation information of the one or more aggregated positioning reference signals of at least one network-side device.

In some embodiments, the carrier aggregation information includes the carrier aggregation information of the one or more aggregated positioning reference signals and cell identification information corresponding to the network-side device.

In some embodiments, the carrier aggregation information includes frequency domain resource information of a plurality of carriers and time domain resource information of one of the plurality of carriers.

Some embodiments of the present disclosure further provide a positioning information processing apparatus, including:
a first obtaining unit, configured to obtain configuration information sent by a Location Management Function (LMF), wherein the configuration information includes carrier aggregation information of one or more aggregated positioning reference signals of at least one network-side device, and the one or more aggregated positioning reference signals are one or more positioning reference signals after being subjected to carrier aggregation; and
a broadcasting unit, configured to broadcast the configuration information.

Some embodiments of the present disclosure further provide a positioning information processing apparatus, including: a second obtaining unit, configured to obtain configuration information broadcast by a network-side device, wherein the configuration information includes carrier aggregation information of one or more aggregated positioning reference signals of at least one network-side device, and the one or more aggregated positioning reference signals are one or more positioning reference signals after being subjected to carrier aggregation; and a processing unit, configured to select a target aggregated positioning reference signal for measurement based on the configuration information and carrier aggregation capability of the terminal, wherein the target aggregated positioning reference signal is a positioning reference signal among the one or more aggregated positioning reference signals sent by at least one network-side device.

Some embodiments of the present disclosure further provide a positioning information processing apparatus, including: a third obtaining unit, configured to obtain carrier aggregation information of one or more aggregated positioning reference signals of at least one network-side device, wherein the one or more aggregated positioning reference signals are one or more positioning reference signals after being subjected to carrier aggregation; and a first sending unit, configured to send configuration information to a target network-side device based on the carrier aggregation information, wherein the configuration information includes the carrier aggregation information of the one or more aggregated positioning reference signals of at least one network-side device.

Some embodiments of the present disclosure further provide a processor-readable storage medium, wherein the processor-readable storage medium stores a computer program, and the computer program is configured to cause a processor to execute steps of the positioning information processing methods according to the above.

The above technical solution of the present disclosure has at least the following beneficial effects:
in the embodiments of the present disclosure, the configuration information sent by the Location Management Function (LMF) is obtained, where the configuration information includes carrier aggregation information of one or more aggregated positioning reference signals of at least one network-side device, and the one or more aggregated positioning reference signals are one or more positioning reference signals after being subjected to carrier aggregation; and the configuration information is broadcast, so that the terminal selects the target aggregated positioning reference signal for measurement based on the broadcast configuration information and the carrier aggregation capability of the terminal. Through the foregoing solution, the network-side device does not need to separately configure the aggregated positioning reference signal for each terminal, thereby effectively reducing the signaling overhead between the network and the terminal, and effectively improving the positioning accuracy of all terminals in the network based on the broadcast configuration information.

### BRIEF DESCRIPTION OF THE DRAWINGS

FIG. 1 is a structural diagram of a network system to which some embodiments of the present disclosure may be applied;
FIG. 2 is a first schematic flowchart of a positioning information processing method according to some embodiments of the present disclosure;
FIG. 3 is a second schematic flowchart of a positioning information processing method according to some embodiments of the present disclosure;
FIG. 4 is a third schematic flowchart of a positioning information processing method according to some embodiments of the present disclosure;
FIG. 5 is a schematic interaction diagram of a positioning information processing method according to some embodiments of the present disclosure;
FIG. 6 is a structural block diagram of a network-side device or an LMF according to some embodiments of the present disclosure;
FIG. 7 is a structural block diagram of a terminal according to some embodiments of the present disclosure;
FIG. 8 is a first schematic block diagram of a positioning information processing apparatus according to some embodiments of the present disclosure;
FIG. 9 is a second schematic block diagram of a positioning information processing apparatus according to some embodiments of the present disclosure;
FIG. 10 is a third schematic block diagram of a positioning information processing apparatus according to some embodiments of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

The terms "first", "second", and the like in the specification and claims of the present disclosure are used to distinguish similar objects, and are not necessarily used to describe a specific order or sequence. It should be understood that the terms used in this way may be interchanged under appropriate circumstances, so that the embodiments of the present disclosure described herein can be implemented in an order other than those illustrated or described herein. In addition, the terms "include" and "have" and any variations thereof are intended to cover non-exclusive inclusion; for example, a process, method, system, product, or device that includes a series of steps or units is not necessarily limited to those steps or units clearly listed, but may include other steps or units that are not clearly listed or inherent to these processes, methods, products, or devices.

In the embodiments of the present disclosure, the term "and/or" describes an association relationship between associated objects, indicating that three relationships may exist; for example, A and/or B may indicate that A exists alone, both A and B exist, or B exists alone. The character "/" generally indicates an "or" relationship between the associated objects preceding and following it. In the embodiments of the present disclosure, the term "a plurality of" means two or more, and the same applies to other quantifiers.

In the embodiments of the present disclosure, words such as "exemplary" or "for example" are used to represent examples, illustrations, or descriptions. Any embodiment or design solution described as "exemplary" or "for example" in the embodiments of the present disclosure shall not be construed as being more preferred or advantageous than other embodiments or design solutions. Exactly, the use of words such as "exemplary" or "for example" is intended to present the relevant concepts in a specific manner.

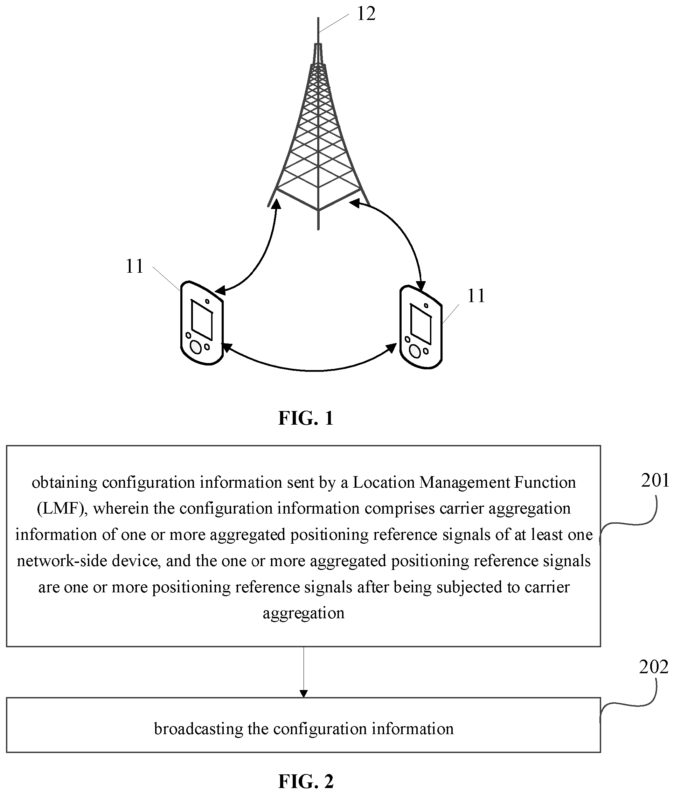

FIG. 1 is a block diagram of a wireless communication system to which embodiments of the present disclosure may be applied. The wireless communication system includes a terminal device 11 and a network-side device (or a network device) 12, and the terminal device 11 may also be referred to as a terminal or a User Equipment (UE). It should be noted that the specific type of the terminal 11 is not limited in the embodiments of the present disclosure. The network-side device 12 may be a base station or a core network; it should be noted that in the embodiments of the present disclosure, only a base station in the New Radio (NR) system is taken as an example, but the specific type of the base station is not limited.

To enable those skilled in the art to better understand the embodiments of the present disclosure, the following description is first provided.
(1) NR broadcast positioning assistance information;
   in R16 NR positioning, discussions are underway on how to implement the broadcast of positioning assistance information by the base station side, and the procedure is as follows:
   a Location Management Function (LMF) sends the positioning assistance information to be broadcast to the base station;
   the base station stores the received positioning assistance information and broadcasts it through system messages.
(2) A mechanism for broadcasting the positioning assistance information in Long Term Evolution (LTE);
   in the LTE system, the Enhanced Serving Mobile Location Centre (E-SMLC) generates broadcast information of positioning assistance data, and sends the information to the eNB through the LPPa protocol, the eNB broadcasts the positioning assistance data. Radio Resource Control (RRC) layer only knows the type of the broadcast assistance data, and has no knowledge of other information.

When the network separately configures carrier aggregation of the downlink positioning reference signal for a specific terminal, the terminal will receive and measure the downlink positioning reference signal according to the aggregated indication. If a large number of terminals perform carrier aggregation, it is still necessary to configure carrier aggregation resources for each terminal. Such pure point-to-point communication imposes a large air interface signaling overhead on the entire cell. Since the carrier bandwidth is directly related to the positioning accuracy, it is necessary to find a more efficient method to improve the positioning accuracy of all terminals in the network and reduce the air interface resource consumption of the entire network.

As shown in FIG. 2, some embodiments of the present disclosure provide a positioning information processing method, performed by a network-side device (for example, a base station). The method includes following steps.

Step 201: obtaining configuration information sent by a Location Management Function (LMF), where the configuration information includes carrier aggregation information of one or more aggregated positioning reference signals of at least one network-side device, and the one or more aggregated positioning reference signals are one or more positioning reference signals after being subjected to carrier aggregation.

In this embodiment of the present disclosure, the network-side device sends the aggregated positioning reference signal, and the network-side device reports the carrier aggregation information of the aggregated positioning reference signal and the cell identification information corresponding to the network-side device to the LMF. After obtaining the carrier aggregation information and the cell identification information reported by each network-side device, the LMF generates the above configuration information based on the obtained information and sends the configuration information to the target network-side device.

The target network-side device is a network-side device selected by the LMF that needs to obtain the configuration information.

As an implementation manner, the LMF may send the above configuration information through broadcast.

Step 202: broadcasting the configuration information.

Exemplarily, the above configuration information is included in carrier aggregation assistance data, and the broadcast of the configuration information is achieved by broadcasting the carrier aggregation assistance data. The carrier aggregation assistance data is carried by a Positioning System Information Block (posSIB).

Here, the network-side device broadcasts the configuration information, so that all terminals in the network area corresponding to the network-side device can obtain the carrier aggregation information of the aggregated positioning reference signal, and the wireless network-side device no longer needs to send the aggregated positioning reference signal for each terminal individually, thereby effectively reducing the signaling overhead between the network and the terminal.

In the embodiments of the present disclosure, the configuration information sent by the Location Management Function (LMF) is obtained, where the configuration information includes carrier aggregation information of one or more aggregated positioning reference signals of at least one network-side device, and the one or more aggregated positioning reference signals are one or more positioning reference signals after being subjected to carrier aggregation; and the configuration information is broadcast, so that the terminal selects the target aggregated positioning reference signal for measurement based on the broadcast configuration information and the carrier aggregation capability of the terminal. Through the above solution, the network-side device does not need to separately configure the aggregated positioning reference signal for each terminal, thereby effectively reducing the signaling overhead between the network and the terminal, and effectively improving the positioning accuracy of all terminals in the network based on the broadcast configuration information.

In some embodiments, before obtaining the configuration information sent by the Location Management Function (LMF), the method further includes:
sending the aggregated positioning reference signal;
sending the carrier aggregation information of the aggregated positioning reference signal and the cell identification information corresponding to the network-side device to the LMF.

In the embodiments of the present disclosure, the network-side device sends the aggregated positioning reference signal to the terminal.

The network-side device reports the carrier aggregation information of the aggregated positioning reference signal and the cell identification information corresponding to the network-side device to the LMF, or statically configures the above carrier aggregation information and cell identification information to the LMF through Operation & Maintenance (O&M).

As an implementation manner, the above cell identification information includes a Physical Cell ID or a Cell Global ID.

In some embodiments, the carrier aggregation information includes frequency domain resource information of a plurality of carriers and time domain resource information of one of the plurality of carriers.

Since the time domain resource information of the plurality of carriers is the same, sending the time domain resource information of only one carrier can effectively reduce the signaling overhead.

In some embodiments, the carrier aggregation information further includes: which Transmission Receive Points (TRPs) under the cell can perform aggregation of positioning reference signals, which frequency layers are aggregated within the aggregating TRP, or which resource sets are aggregated, as well as other configuration information such as the positioning reference signal waveform (e.g., time domain information, signal period, offset, etc.). The resources aggregated within the TRP share the same time domain information and the same positioning signal waveform configuration (e.g., comb size), and there is no need to repeatedly send the same information within the aggregated TRP or aggregated resources, thereby reducing broadcast resources.

Through the solution of the embodiments of the present disclosure, the network-side device does not need to separately configure the aggregated positioning reference signal for each terminal, which effectively reduces the signaling overhead between the network and the terminal, and effectively improves the positioning accuracy of all terminals in the network based on the broadcast configuration information.

In addition, in a case where the network-side device notifies a specific terminal of an aggregation indication in a Lightweight Presentation Protocol (LPP)-specific signaling, the sent aggregation assistance information (e.g., a Positioning System Information Block (posSIB)) only carries the time domain configuration information of one carrier, and the time domain information of other carriers is not sent, so as to reduce air interface signaling.

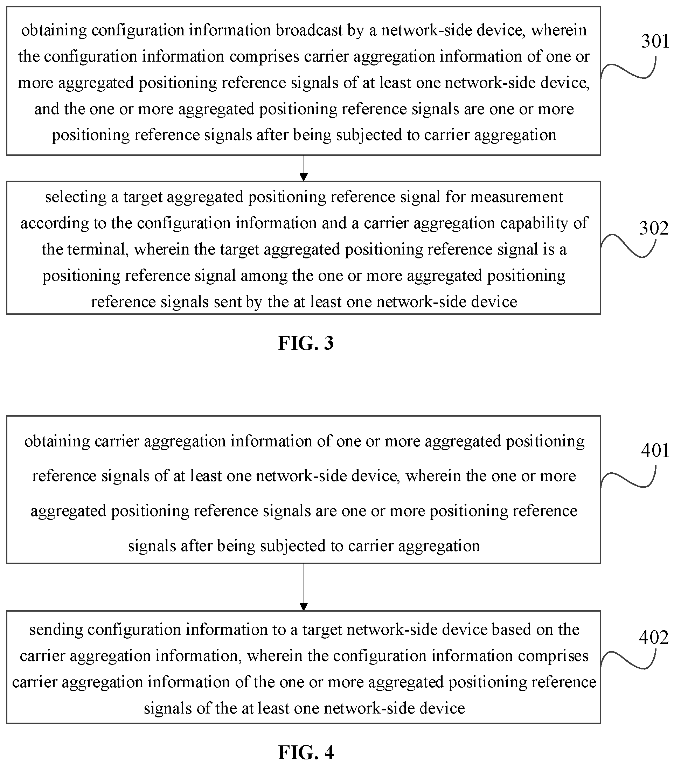

As shown in FIG. 3, some embodiments of the present disclosure further provide a positioning information processing method, performed by a terminal. The method includes following steps.

Step 301: obtaining configuration information broadcast by a network-side device, where the configuration information includes carrier aggregation information of one or more aggregated positioning reference signals of at least one network-side device, and the one or more aggregated positioning reference signals are one or more positioning reference signals after being subjected to carrier aggregation.

In some embodiments, the carrier aggregation information includes frequency domain resource information of a plurality of carriers and time domain resource information of one of the plurality of carriers.

In some embodiments, the carrier aggregation information further includes: which Transmission Receive Points (TRPs) under the cell can perform aggregation of positioning reference signals, which frequency layers are aggregated within the aggregating TRPs, or which resource sets are aggregated, as well as other configuration information such as the positioning reference signal waveform (e.g., time domain information, signal period, offset, etc.).

Step 302: selecting a target aggregated positioning reference signal for measurement according to the configuration information and the carrier aggregation capability of the terminal, where the target aggregated positioning reference signal is a positioning reference signal among the one or more aggregated positioning reference signals sent by at least one network-side device.

In some embodiments, the terminal selects one target aggregated positioning reference signal from the aggregated positioning reference signals of at least one network-side device based on the configuration information and its carrier aggregation capability, or selects an aggregated positioning reference signal with a target bandwidth matching its carrier aggregation capability from the aggregated positioning reference signals of a single network-side device as the target aggregated positioning reference signal. That is, the bandwidth of the target aggregated positioning reference signal is smaller than that of the aggregated positioning reference signal sent by the network-side device.

If the terminal does not support carrier aggregation, it ignores the above configuration information and selects a suitable positioning reference signal for measurement only according to the frequencies and the bandwidth supported by itself.

In the embodiments of the present disclosure, the configuration information broadcast by the network-side device is obtained, where the configuration information includes carrier aggregation information of one or more aggregated positioning reference signals of at least one network-side device; and the target aggregated positioning reference signal is selected for measurement based on the configuration information and the carrier aggregation capability of the terminal. In this solution, the network-side device does not need to separately configure the aggregated positioning reference signal for each terminal, which effectively reduces the signaling overhead between the network and the terminal, and effectively improves the positioning accuracy of all terminals in the network based on the broadcast configuration information.

As shown in FIG. 4, some embodiments of the present disclosure further provide a positioning information processing method, performed by a Location Management Function (LMF). The method includes following steps.

Step 401: obtaining carrier aggregation information of one or more aggregated positioning reference signals of at least one network-side device, where the one or more aggregated positioning reference signals are one or more positioning reference signals after being subjected to carrier aggregation.

Step 402: sending configuration information to a target network-side device based on the at least one piece of carrier aggregation information, where the configuration information includes carrier aggregation information of one or more aggregated positioning reference signals of at least one network-side device.

In some embodiments, the target network-side device is a network-side device selected by the LMF that needs to obtain the configuration information.

In this embodiment of the present disclosure, the network-side device sends the aggregated positioning reference signal, and the network-side device reports the carrier aggregation information of the aggregated positioning reference signal and the cell identification information corresponding to the network-side device to the LMF. After obtaining the carrier aggregation information and cell identification information reported by each network-side device, the LMF generates the above configuration information based on the obtained information and sends it to the target network-side device.

With the solution of the embodiments of the present disclosure, the LMF obtains at least one piece of carrier aggregation information of the one or more aggregated positioning reference signals of at least one network-side device; and sends configuration information to the target network-side device based on the at least one piece of carrier aggregation information, so that the target network-side device broadcasts the configuration information. The network-side device does not need to separately configure the aggregated positioning reference signal for each terminal, which effectively reduces the signaling overhead between the network and the terminal, and effectively improves the positioning accuracy of all terminals in the network based on the broadcast configuration information.

In some embodiments, the carrier aggregation information includes the carrier aggregation information of the aggregated positioning reference signal and the cell identification information corresponding to the network-side device.

In some embodiments, the carrier aggregation information includes frequency domain resource information of a plurality of carriers and time domain resource information of one of the plurality of carriers.

Since the time domain resource information of the plurality of carriers is the same, sending the time domain resource information of only one carrier can effectively reduce the signaling overhead.

In some embodiments, the carrier aggregation information further includes: which Transmission Receive Points (TRPs) under the cell can perform positioning reference signal aggregation, which frequency layers are aggregated within the aggregating TRPs, or which resource sets are aggregated, as well as other configuration information such as the positioning reference signal waveform (e.g., time domain information, signal period, offset, etc.). The resources aggregated within the TRP share the same time domain information and the same positioning signal waveform configuration (e.g., comb size), and there is no need to repeatedly send the same information within the aggregated TRP or aggregated resources, thereby reducing broadcast resources.

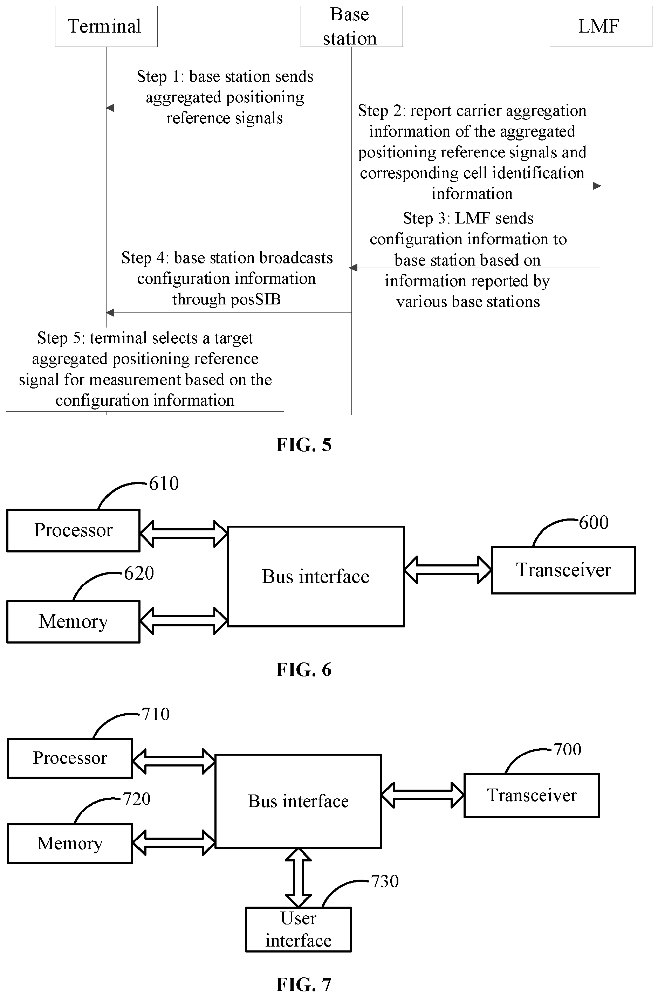

The interaction among the terminal, the network-side device (base station) and the LMF in the embodiments of the present disclosure is described below with reference to FIG. 5.

As shown in FIG. 5, the interaction process includes following steps.

Step 1: the base station sends the aggregated positioning reference signal.

Step 2: the base station reports the carrier aggregation information of the aggregated positioning reference signal and the cell identification information corresponding to the network-side device to the LMF.

Step 3: the LMF sends configuration information to the base station based on the information reported by each base station.

Step 4: the base station broadcasts the configuration information through the posSIB.

Step 5: the terminal selects a target aggregated positioning reference signal for measurement based on the configuration information.

In the above solution, the network-side device does not need to separately configure the aggregated positioning reference signal for each terminal, which effectively reduces the signaling overhead between the network and the terminal, and effectively improves the positioning accuracy of all terminals in the network based on the broadcast configuration information.

As shown in FIG. 6, some embodiments of the present disclosure further provide a positioning information processing apparatus, including a memory 620, a transceiver 600, and a processor 610.

The memory 620 is configured to store a computer program; the transceiver 600 is configured to send and receive data under the control of the processor.

In some embodiments of the present disclosure, the processor 610 is configured to read the computer program in the memory and perform the following operations:
obtaining configuration information sent by a Location Management Function (LMF), where the configuration information includes carrier aggregation information of one or more aggregated positioning reference signals of at least one network-side device, and the one or more aggregated positioning reference signals are one or more positioning reference signals after being subjected to carrier aggregation; and
broadcasting the configuration information.

In some embodiments, the processor 610 further implements the following steps:
sending the aggregated positioning reference signal;
sending the carrier aggregation information of the aggregated positioning reference signal and the cell identification information corresponding to the network-side device to the LMF.

In some embodiments, the carrier aggregation information includes frequency domain resource information of a plurality of carriers and time domain resource information of one of the plurality of carriers.

In some embodiments of the present disclosure, the processor 610 is configured to read the computer program in the memory and perform the following operations:
obtaining at least one piece of carrier aggregation information of one or more aggregated positioning reference signals of at least one network-side device, where the one or more aggregated positioning reference signals are one or more positioning reference signals after being subjected to carrier aggregation;
sending configuration information to a target network-side device based on the at least one piece of carrier aggregation information, where the configuration information includes at least one piece of carrier aggregation information of one or more aggregated positioning reference signals of at least one network-side device.

In some embodiments, the carrier aggregation information includes the carrier aggregation information of the aggregated positioning reference signal and the cell identification information corresponding to the network-side device.

In some embodiments, the carrier aggregation information includes frequency domain resource information of a plurality of carriers and time domain resource information of one of the plurality of carriers.

In FIG. 6, the bus architecture may include any number of interconnected buses and bridges, and specifically, various circuits of one or more processors represented by the processor 610 and the memory represented by the memory 620 are linked together. The bus architecture may also link various other circuits such as peripheral devices, voltage regulators, and power management circuits, all of which are well known in the art and therefore will not be further described herein. The bus interface provides an interface. The transceiver 600 may include a plurality of components, i.e., a transmitter and a receiver, providing a unit for communicating with various other devices over transmission media including wireless channels, wired channels, optical cables, and the like. The processor 610 is responsible for managing the bus architecture and general processing, and the memory 620 may store data used by the processor 610 when performing operations.

The processor 610 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

It should be noted that the above apparatus provided in the embodiments of the present disclosure can implement all the method steps of the positioning information processing method applied to the network-side device or the LMF, and can achieve the same technical effects, which will not be repeated herein.

As shown in FIG. 7, some embodiments of the present disclosure provide a positioning information processing apparatus, applied to a terminal, including a memory 720, a transceiver 700, and a processor 710.

The memory 720 is configured to store a computer program; the transceiver 700 is configured to send and receive data under the control of the processor 710; the processor 710 is configured to read the computer program in the memory 720 and perform the following operations:
obtaining configuration information broadcast by a network-side device, where the configuration information includes carrier aggregation information of one or more aggregated positioning reference signals of at least one network-side device, and the one or more aggregated positioning reference signals are one or more positioning reference signals after being subjected to carrier aggregation; and
selecting a target aggregated positioning reference signal for measurement according to the configuration information and a carrier aggregation capability of the terminal, where the target aggregated positioning reference signal is a positioning reference signal among the aggregated positioning reference signals sent by at least one network-side device.

In some embodiments, the carrier aggregation information includes frequency domain resource information of a plurality of carriers and time domain resource information of one of the plurality of carriers.

In FIG. 7, the bus architecture may include any number of interconnected buses and bridges, and specifically, various circuits of one or more processors represented by the processor 710 and the memory represented by the memory 720 are linked together. The bus architecture may also link various other circuits such as peripheral devices, voltage regulators, and power management circuits, all of which are well known in the art and therefore will not be further described herein. The bus interface provides an interface. The transceiver 700 may include a plurality of components, i.e., a transmitter and a receiver, providing a unit for communicating with various other devices over transmission media including wireless channels, wired channels, optical cables, and the like. For different user devices, the user interface 730 may also be an interface capable of connecting to external or internal required devices, where the connected devices include, but are not limited to, a keypad, a display, a speaker, a microphone, a joystick, and the like.

The processor 710 is responsible for managing the bus architecture and general processing, and the memory 720 may store data used by the processor 710 when performing operations.

In some embodiments, the processor 710 may be a CPU, an ASIC, an FPGA, or a CPLD, and the processor may also adopt a multi-core architecture.

The processor executes any of the methods provided in the embodiments of the present disclosure according to the obtained executable instructions by invoking the computer program stored in the memory. The processor and the memory may also be physically arranged separately.

It should be noted that the above apparatus provided in the embodiments of the present disclosure can implement all the method steps of the positioning information processing method applied to the terminal, and can achieve the same technical effects, which will not be repeated herein.

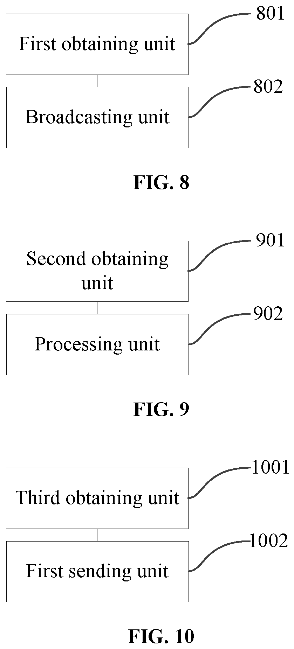

As shown in FIG. 8, some embodiments of the present disclosure further provide a positioning information processing apparatus, including following:
a first obtaining unit 801, configured to obtain configuration information sent by a Location Management Function (LMF), where the configuration information includes carrier aggregation information of one or more aggregated positioning reference signals of at least one network-side device, and the one or more aggregated positioning reference signals are one or more positioning reference signals after being subjected to carrier aggregation; and
a broadcasting unit 802, configured to broadcast the configuration information.

In some embodiments, the apparatus of the embodiments of the present disclosure further includes:
a second sending unit, configured to send the aggregated positioning reference signal before the first obtaining unit obtains the configuration information sent by the Location Management Function (LMF); and
a third sending unit, configured to send the carrier aggregation information of the aggregated positioning reference signal and the cell identification information corresponding to the network-side device to the LMF.

In some embodiments, the carrier aggregation information includes frequency domain resource information of a plurality of carriers and time domain resource information of one of the plurality of carriers.

It should be noted that the above apparatus provided in the embodiments of the present disclosure can implement all the method steps of the positioning information processing method applied to the network-side device, and can achieve the same technical effects. The same parts and beneficial effects as those of the method embodiments will not be described in detail herein.

As shown in FIG. 9, some embodiments of the present disclosure further provide a positioning information processing apparatus, including following:
a second obtaining unit 901, configured to obtain configuration information broadcast by a network-side device, where the configuration information includes carrier aggregation information of one or more aggregated positioning reference signals of at least one network-side device, and the one or more aggregated positioning reference signals are one or more positioning reference signals after being subjected to carrier aggregation; and
a processing unit 902, configured to select a target aggregated positioning reference signal for measurement, according to the configuration information and a carrier aggregation capability of the terminal, where the target aggregated positioning reference signal is a positioning reference signal among the aggregated positioning reference signals sent by at least one network-side device.

In some embodiments, the carrier aggregation information includes frequency domain resource information of a plurality of carriers and time domain resource information of one of the plurality of carriers.

It should be noted that the above apparatus provided in the embodiments of the present disclosure can implement all the method steps of the positioning information processing method applied to the terminal, and can achieve the same technical effects, which will not be repeated herein.

As shown in FIG. 10, some embodiments of the present disclosure further provide a positioning information processing apparatus, including:
a third obtaining unit 1001, configured to obtain carrier aggregation information of one or more aggregated positioning reference signals of at least one network-side device, where the one or more aggregated positioning reference signals are one or more positioning reference signals after being subjected to carrier aggregation; and
a first sending unit 1002, configured to send configuration information to a target network-side device according to the at least one piece of carrier aggregation information, where the configuration information includes carrier aggregation information of one or more aggregated positioning reference signals of at least one network-side device.

In some embodiments, the carrier aggregation information includes the carrier aggregation information of the aggregated positioning reference signal and the cell identification information corresponding to the network-side device.

In some embodiments, the carrier aggregation information includes frequency domain resource information of a plurality of carriers and time domain resource information of one of the plurality of carriers.

It should be noted that the above apparatus provided in the embodiments of the present disclosure can implement all the method steps of the positioning information processing method applied to the LMF, and can achieve the same technical effects. The same parts and beneficial effects as those of the method embodiments will not be described in detail herein.

It should be noted that the division of units in the embodiments of the present disclosure is schematic and merely a logical function division, and other division manners may be adopted in actual implementation. In addition, each functional unit in the embodiments of the present disclosure may be integrated into one processing unit, or each unit may exist physically alone, or two or more units may be integrated into one unit. The integrated unit may be implemented in the form of hardware, or in the form of a software functional unit.

When the integrated unit is implemented in the form of a software functional unit and sold or used as an independent product, it may be stored in a processor-readable storage medium. Based on such understanding, the technical solution of the present disclosure, essentially or the part contributing to the related art, or all or part of the technical solution, may be embodied in the form of a software product. The computer software product is stored in a storage medium and includes several instructions for causing a computer device (which may be a personal computer, a server, a network device, etc.) or a processor to execute all or part of the steps of the method described in the embodiments of the present disclosure. The aforementioned storage medium includes various media capable of storing program codes, such as a USB flash drive, a removable hard disk, a Read-Only Memory (ROM), a Random Access Memory (RAM), a magnetic disk, or an optical disk.

In some embodiments of the present disclosure, a processor-readable storage medium is further provided, where the processor-readable storage medium stores program instructions that are configured to cause the processor to execute all the steps of the method embodiments implemented by the network-side device, the terminal, or the LMF, and achieve the same technical effects, which will not be described in detail herein.

The terminal device in the embodiments of the present disclosure may be a device that provides voice and/or data connectivity to a user, a handheld device with a wireless connection function, or another processing device connected to a wireless modem. The name of the terminal device may be different in different systems; for example, in a 5G system, the terminal device may be referred to as User Equipment (UE). A wireless terminal device may communicate with one or more core networks (CN) through a Radio Access Network (RAN), and the wireless terminal device may be a mobile terminal device such as a mobile phone (or a "cellular" phone) and a computer with a mobile terminal device. For example, it may be a portable, pocket-sized, handheld, computer-built-in, or vehicle-mounted mobile device that exchanges voice and/or data with the Radio Access Network. Examples include a Personal Communication Service (PCS) phone, a cordless phone, a Session Initiated Protocol (SIP) phone, a Wireless Local Loop (WLL) station, a Personal Digital Assistant (PDA), and the like. The wireless terminal device may also be referred to as a system, a subscriber unit, a subscriber station, a mobile station, a mobile, a remote station, an access point, a remote terminal, an access terminal, a user terminal, a user agent, a user device, and the like, which are not limited in the embodiments of the present disclosure.

The network device (or network-side device) in the embodiments of the present disclosure may be a base station, and the base station may include a plurality of cells serving terminals. The base station may also be referred to as an access point according to different specific application scenarios, or a device in the access network that communicates with wireless terminal devices through one or more sectors over an air interface, or by other names. The network device may be configured to convert received air interface frames into Internet Protocol (IP) packets and vice versa, acting as a router between the wireless terminal device and the rest of the access network, where the rest of the access network may include an IP communication network. The network device may also coordinate the attribute management of the air interface. For example, the network device in the embodiments of the present disclosure may be a Base Transceiver Station (BTS) in the Global System for Mobile communications (GSM) or Code Division Multiple Access (CDMA), a NodeB in Wide-band Code Division Multiple Access (WCDMA), an evolved Node B (eNB or e-NodeB) in the Long Term Evolution (LTE) system, a 5G base station (gNB) in a next generation system, a Home evolved Node B (HeNB), a relay node, a femto base station, a pico base station, and the like, which are not limited in the embodiments of the present disclosure. In some network structures, the network device may include a Centralized Unit (CU) node and a Distributed Unit (DU) node, which may also be geographically separated.

The network device and the terminal device may each use one or more antennas to perform Multi Input Multi Output (MIMO) transmission, where the MIMO transmission may be Single User MIMO (SU-MIMO) or Multiple User MIMO (MU-MIMO). According to the form and number of antenna combinations, MIMO transmission may be two-dimensional MIMO (2D-MIMO), three-dimensional MIMO (3D-MIMO), Full Dimension MIMO (FD-MIMO), or massive-MIMO, and may also be diversity transmission, precoding transmission, beamforming transmission, and the like.

Those skilled in the art should understand that the embodiments of the present disclosure may be provided as a method, a system, or a computer program product. Therefore, the present disclosure may adopt the form of an entirely hardware embodiment, an entirely software embodiment, or an embodiment combining software and hardware aspects. Moreover, the present disclosure may adopt the form of a computer program product implemented on one or more computer-usable storage media (including, but not limited to, disk storage and optical storage) containing computer-usable program codes.

The present disclosure is described with reference to flowcharts and/or block diagrams of methods, devices (systems), and computer program products according to the embodiments of the present disclosure. It should be understood that each process and/or block in the flowcharts and/or block diagrams, and combinations of processes and/or blocks in the flowcharts and/or block diagrams, may be implemented by computer-executable instructions. These computer-executable instructions may be provided to the processor of a general-purpose computer, a special-purpose computer, an embedded processor, or other programmable data processing devices to produce a machine, such that the instructions executed by the processor of the computer or other programmable data processing devices produce an apparatus for implementing the functions specified in one or more processes in the flowcharts and/or one or more blocks in the block diagrams.

These processor-executable instructions may also be stored in a processor-readable memory that can direct a computer or other programmable data processing devices to operate in a specific manner, such that the instructions stored in the processor-readable memory produce an article of manufacture including an instruction apparatus that implements the functions specified in one or more processes in the flowcharts and/or one or more blocks in the block diagrams.

These processor-executable instructions may also be loaded onto a computer or other programmable data processing apparatus, such that a series of operational steps are performed on the computer or other programmable apparatus to produce a computer-implemented process, such that the instructions executed on the computer or other programmable apparatus provide steps for implementing the functions specified in one or more processes in the flowcharts and/or one or more blocks in the block diagrams.

It should be noted that the division of the aforementioned modules is merely a logical function division, and all or some of the modules may be integrated into one physical entity or physically separated in actual implementation. In addition, all the modules may be implemented in the form of software invoked by a processing element, or all in the form of hardware; or some modules may be implemented in the form of software invoked by a processing element, and some in the form of hardware. For example, the determining module may be a separately provided processing element, or may be integrated into a chip of the above apparatus. In addition, the determining module may also be stored in the memory of the above apparatus in the form of program code, and the function of the aforementioned determining module is invoked and executed by a processing element of the above apparatus. The implementation of other modules is similar thereto. In addition, all or part of these modules may be integrated together or implemented independently. The processing element described herein may be an integrated circuit with signal processing capability. In the implementation process, each step of the above method or each of the above modules may be completed by an integrated logic circuit of hardware in the processor element or an instruction in the form of software.

For example, each module, unit, sub-unit, or sub-module may be one or more integrated circuits configured to implement the above method, such as one or more Application Specific Integrated Circuits (ASICs), one or more digital signal processors (DSPs), or one or more Field Programmable Gate Arrays (FPGAs). For another example, when the aforementioned module is implemented in the form of scheduling program code by a processing element, the processing element may be a general-purpose processor such as a Central Processing Unit (CPU) or another processor that can invoke program code. For another example, these modules may be integrated together and implemented in the form of a system-on-a-chip (SOC).

The terms "first", "second", and the like in the specification and claims of the present disclosure are used to distinguish similar objects, and are not necessarily used to describe a specific order or sequence. It should be understood that the data used in this way may be interchanged under appropriate circumstances, so that the embodiments of the present disclosure described herein can be implemented in an order other than those illustrated or described herein. In addition, the terms "include" and "have" and any variations thereof are intended to cover non-exclusive inclusion; for example, a process, method, system, product, or device that includes a series of steps or units is not necessarily limited to those steps or units clearly listed, but may include other steps or units that are not clearly listed or inherent to these processes, methods, products, or devices. In addition, the term "and/or" is used in the specification and claims to indicate at least one of the connected objects; for example, A and/or B and/or C indicates seven cases including A alone, B alone, C alone, both A and B, both B and C, both A and C, and all of A, B and C. Similarly, the phrase "at least one of A and B" used in the specification and claims shall be understood as "A alone, B alone, or both A and B".

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A positioning information processing method, performed by a network-side device, the method comprising:
obtaining configuration information sent by a Location Management Function (LMF), wherein the configuration information comprises carrier aggregation information of one or more aggregated positioning reference signals of at least one network-side device, and the one or more aggregated positioning reference signals are one or more positioning reference signals after being subjected to carrier aggregation; and
broadcasting the configuration information.

2. The method according to claim 1, wherein before obtaining the configuration information sent by the Location Management Function (LMF), the method further comprises:
sending the one or more aggregated positioning reference signals;
sending the carrier aggregation information of the one or more aggregated positioning reference signals and cell identification information corresponding to the network-side device to the LMF.

3. The method according to claim 1 or 2, wherein the carrier aggregation information comprises frequency domain resource information of a plurality of carriers and time domain resource information of one of the plurality of carriers.

4. A positioning information processing method, performed by a terminal, the method comprising:
obtaining configuration information broadcast by a network-side device, wherein the configuration information comprises carrier aggregation information of one or more aggregated positioning reference signals of at least one network-side device, and the one or more aggregated positioning reference signals are one or more positioning reference signals after being subjected to carrier aggregation; and
selecting a target aggregated positioning reference signal for measurement according to the configuration information and a carrier aggregation capability of the terminal, wherein the target aggregated positioning reference signal is a positioning reference signal among the one or more aggregated positioning reference signals sent by the at least one network-side device.

5. The method according to claim 4, wherein the carrier aggregation information comprises frequency domain resource information of a plurality of carriers and time domain resource information of one of the plurality of carriers.

6. A positioning information processing method, performed by a Location Management Function (LMF), the method comprising:
obtaining carrier aggregation information of one or more aggregated positioning reference signals of at least one network-side device, wherein the one or more aggregated positioning reference signals are one or more positioning reference signals after being subjected to carrier aggregation;
sending configuration information to a target network-side device based on the carrier aggregation information, wherein the configuration information comprises carrier aggregation information of the one or more aggregated positioning reference signals of the at least one network-side device.

7. The method according to claim 6, wherein the carrier aggregation information comprises the carrier aggregation information of the one or more aggregated positioning reference signals and cell identification information corresponding to the network-side device.

8. The method according to claim 6 or 7, wherein the carrier aggregation information comprises frequency domain resource information of a plurality of carriers and time domain resource information of one of the plurality of carriers.

9. A positioning information processing apparatus, comprising a memory, a transceiver, and a processor;
wherein the memory is configured to store a computer program; the transceiver is configured to send and receive data under control of the processor; and the processor is configured to read the computer program in the memory and perform the following operations:
obtaining configuration information sent by a Location Management Function (LMF), wherein the configuration information comprises carrier aggregation information of one or more aggregated positioning reference signals of at least one network-side device, and the one or more aggregated positioning reference signals are one or more positioning reference signals after being subjected to carrier aggregation; and
broadcasting the configuration information.

10. The apparatus according to claim 9, wherein the processor further implements the following steps:
sending the one or more aggregated positioning reference signals;
sending the carrier aggregation information of the one or more aggregated positioning reference signals and cell identification information corresponding to the network-side device to the LMF.

11. The apparatus according to claim 9 or 10, wherein the carrier aggregation information comprises frequency domain resource information of a plurality of carriers and time domain resource information of one of the plurality of carriers.

12. A positioning information processing apparatus, comprising a memory, a transceiver, and a processor;
wherein the memory is configured to store a computer program; the transceiver is configured to send and receive data under the control of the processor; and the processor is configured to read the computer program in the memory and perform the following operations:
obtaining configuration information broadcast by a network-side device, wherein the configuration information comprises carrier aggregation information of one or more aggregated positioning reference signals of at least one network-side device, and the one or more aggregated positioning reference signals are one or more positioning reference signals after being subjected to carrier aggregation; and
selecting a target aggregated positioning reference signal for measurement according to the configuration information and carrier aggregation capability of a terminal, wherein the target aggregated positioning reference signal is a positioning reference signal among the one or more aggregated positioning reference signals sent by at least one network-side device.

13. The apparatus according to claim 12, wherein the carrier aggregation information comprises frequency domain resource information of a plurality of carriers and time domain resource information of one of the plurality of carriers.

14. A positioning information processing apparatus, comprising a memory, a transceiver, and a processor;
wherein the memory is configured to store a computer program; the transceiver is configured to send and receive data under control of the processor; and the processor is configured to read the computer program in the memory and perform the following operations:
obtaining carrier aggregation information of one or more aggregated positioning reference signals of at least one network-side device, wherein the one or more aggregated positioning reference signals are one or more positioning reference signals after being subjected to carrier aggregation;
sending configuration information to a target network-side device based on the carrier aggregation information, wherein the configuration information comprises the carrier aggregation information of the one or more aggregated positioning reference signals of at least one network-side device.

15. The apparatus according to claim 14, wherein the carrier aggregation information comprises the carrier aggregation information of the one or more aggregated positioning reference signals and cell identification information corresponding to the network-side device.

16. The apparatus according to claim 14 or 15, wherein the carrier aggregation information comprises frequency domain resource information of a plurality of carriers and time domain resource information of one of the plurality of carriers.

17. A positioning information processing apparatus, comprising:
a first obtaining unit, configured to obtain configuration information sent by a Location Management Function (LMF), wherein the configuration information comprises carrier aggregation information of one or more aggregated positioning reference signals of at least one network-side device, and the one or more aggregated positioning reference signals are one or more positioning reference signals after being subjected to carrier aggregation; and
a broadcasting unit, configured to broadcast the configuration information.

18. The apparatus according to claim 17, further comprising:
a second sending unit, configured to send the one or more aggregated positioning reference signals before the first obtaining unit obtains the configuration information sent by the Location Management Function (LMF); and
a third sending unit, configured to send the carrier aggregation information of the one or more aggregated positioning reference signals and cell identification information corresponding to the network-side device to the LMF.

19. The apparatus according to claim 17 or 18, wherein the carrier aggregation information comprises frequency domain resource information of a plurality of carriers and time domain resource information of one of the plurality of carriers.

20. A positioning information processing apparatus, comprising:
a second obtaining unit, configured to obtain configuration information broadcast by a network-side device, wherein the configuration information comprises carrier aggregation information of one or more aggregated positioning reference signals of at least one network-side device, and the one or more aggregated positioning reference signals are one or more positioning reference signals after being subjected to carrier aggregation; and
a processing unit, configured to select a target aggregated positioning reference signal for measurement based on the configuration information and carrier aggregation capability of the terminal, wherein the target aggregated positioning reference signal is a positioning reference signal among the one or more aggregated positioning reference signals sent by at least one network-side device.

21. The apparatus according to claim 20, wherein the carrier aggregation information comprises frequency domain resource information of a plurality of carriers and time domain resource information of one of the plurality of carriers.

22. A positioning information processing apparatus, comprising:
a third obtaining unit, configured to obtain carrier aggregation information of one or more aggregated positioning reference signals of at least one network-side device, wherein the one or more aggregated positioning reference signals are one or more positioning reference signals after being subjected to carrier aggregation; and
a first sending unit, configured to send configuration information to a target network-side device based on the carrier aggregation information, wherein the configuration information comprises the carrier aggregation information of the one or more aggregated positioning reference signals of at least one network-side device.

23. The apparatus according to claim 22, wherein the carrier aggregation information comprises the carrier aggregation information of the one or more aggregated positioning reference signals and cell identification information corresponding to the network-side device.

24. The apparatus according to claim 22 or 23, wherein the carrier aggregation information comprises frequency domain resource information of a plurality of carriers and time domain resource information of one of the plurality of carriers.

25. A processor-readable storage medium, wherein the processor-readable storage medium stores a computer program, and the computer program is configured to cause a processor to execute steps of the positioning information processing method according to any one of claims 1 to 3, or perform steps of the positioning information processing method according to any one of claims 4 to 5, or perform steps of the positioning information processing method according to any one of claims 6 to 8.
